# EUROPEAN PATENT APPLICATION

(11) **EP 3 383 012 A1**
(43) Date of publication of application: **03.10.2018**
(21) Application number: 17164411.5
(22) Date of filing: 31.03.2017
(51) Int. Cl.: H04M 11/06, H04M 3/30

(54) **IDENTIFYING BROADBAND INTERFERENCE**

(71) Applicant: British Telecommunications public limited company, London EC1A 7AJ (GB)
(72) Inventor: The designation of the inventor has not yet been filed
(74) Representative: British Telecommunications public limited company Intellectual Property Department

(57) **Abstract**

This invention relates to a method of identifying an electromagnetic interference fault associated with a digital subscriber line, in particular intermittent REIN/SHINE faults. The method gathers appropriate DSL line parameters that are affected by electromagnetic interference, such as the errored seconds or signal to noise ratio. Electrical power usage data associated with the customer premises is also gathered. With sufficient data gathered over a period of time, a degree of similarity between the two sets of data can be determined, for example by comparing on/off events in the power usage data (indicative of an appliance being switched on/off) with a change in the DSL line parameter. Alternatively, cross-correlation between the interference data and the power usage data can be used. The degree of similarity between the two sets of data gives an indication as to whether the line is experiencing electromagnetic interference originating from the customer premises.

## Description

### Field of the Invention

This invention relates to a method of identifying interference on a digital subscriber line.

### Background to the Invention

Digital subscriber line (DSL) services, commonly referred to as "broadband" services, are deployed using metallic PSTN lines that run between a digital subscriber line access multiplexer (DSLAM) and modems in subscribers' properties. With asymmetric DSL (ADSL) the DSLAM is located in the exchange and the line can be typically up to 7km in length. With very-high bit-rate DSL (VDSL), the DSLAM is located in a local cabinet with the line being much shorter, typically a maximum of 2km. The line is normally made up of a twisted copper pair, but can include lengths of aluminium.

Faults on DSL lines are not uncommon, and currently most faults are found by customers reporting problems such as their line being noisy, having slower than expected broadband speed, or even interrupted broadband service. Troubleshooting a fault often includes performing line tests on the line. Line tests can also be performed proactively to identify faults before a customer reports them. These line tests are typically electrical line tests that measure the electrical characteristics of a line and check that the results meet a standard (for example, as set out in SIN349 by British Telecommunications plc). It is also possible to compare line tests over a period of time to see if the line's electrical characteristics are deteriorating. Once a fault has been detected, an engineer can use electrical line testing, typically pair quality tests, to try and determine where the fault is located and make the appropriate repairs.

However, there are a range of fault conditions which are not picked up by this process. This can be due to the faults being intermittent or not severe enough to be measureable using existing techniques. Intermittent faults are particularly problematic to find but can cause great disruption to broadband services where a line drop can result in a service outage whilst the line retrains.

DSL services use a spectral band that is shared with other transmissions. The usage of electro-mechanical, electronic, and electrical equipment can also generate radio frequency signals in the same spectral band, although under normal operation these signals are of a sufficiently low level as to cause no interference with broadband. However, under fault conditions such equipment can generate electromagnetic (radio frequency) signals that can interfere with and significantly affect the performance of DSL broadband. Such electromagnetic interference is often referred to a Repetitive Electrical Impulse Noise (REIN) and Single High level Impulse Noise Event (SHINE). PSTN lines that are electrically unbalanced are also more susceptible to interference.

When such interference occurs it can be extremely difficult and time consuming to first detect the interference is present and causing a problem, and secondly to find the source of the interference. This is compounded by the REIN/SHINE being present for short periods of time at seemingly random times during the day making the detection by sending an engineer to visit very problematic.

US patent application US2008/0190639 describes technology provided diagnostic capability and software enhanced powerline adapters. The diagnostic capability includes collecting network performance data and either analysing or forwarding data for analysis.

US patent application US2014105262 describes a method and apparatus for detecting and characterizing noise and other events affecting a communications system such as DSL. The system includes a noise analysis engine that is embedded in customer premises equipment that classifies noise sources according to their specific characteristics and tracks each noise source in a dynamic manner, in such a way as to provide visibility to the changing noise environment within the customer premises and/or report this environment to a remote entity.

### Summary of the Invention

According to one aspect of the present invention, there is provided a method of identifying an electromagnetic interference fault associated with a digital subscriber line in a telecommunications network, said method comprising:
generating an interference signature by monitoring a digital subscriber line parameter associated with the digital subscriber line over a period of time, wherein the digital subscriber line parameter is one that is affected by electromagnetic interference;
generating an electrical power usage signature by monitoring the electrical power usage at the customer premises associated with the digital subscriber line over the period of time;
determining a degree of similarity between the interference signature and the electrical power usage signature; and
generating a fault classification for the line in dependence on the result of the determining step.

The method may further comprises comparing the determined degree of similarity to a threshold, and wherein the fault classification is generated based on the result of the comparison.

The fault classification may comprise an identification of whether there is an electromagnetic fault experienced on the line.

The interference signature may comprise interference events, each interference event corresponding to an increase in the digital subscriber line parameter. The electrical power usage signature may comprises electrical power usage events, each electrical power usage event corresponding to an increase in electrical power usage. The step of determining the degree of similarity between the interference signature and the electrical power usage signature may comprises matching the interference events with the electrical power usage events.

The digital subscriber line parameter may be one of: downstream errored seconds, signal to noise ratio, or line rate.

According to one aspect of the present invention, there is provided a control module for identifying an electromagnetic interference fault associated with a digital subscriber line in a telecommunications network, adapted to:
generate an interference signature by monitoring a digital subscriber line parameter associated with the digital subscriber line over a period of time, wherein the digital subscriber line parameter is one that is affected by electromagnetic interference;
generate an electrical power usage signature by monitoring the electrical power usage at the customer premises associated with the digital subscriber line over the period of time;
determine a degree of similarity between the interference signature and the electrical power usage signature; and
generate a fault classification for the line in dependence on the result of the determining step.

### Brief Description of the Drawings

For a better understanding of the present invention reference will now be made by way of example only to the accompanying drawings, in which:
Figure 1 is a system diagram showing a telephone exchange DSL lines running to customer premises;
Figure 2 illustrates a customer premises in an example of the invention;
Figure 3 illustrates a customer premises in a further example of the invention; is a graph showing the SNR margin for a good line over a 24 hour period;
Figure 4 is flow chart summarising the steps of the invention;
Figure 5 is a graph showing the errored seconds over week for an example line;
Figure 6 is a graph showing power usage over a week for the example line;
Figure 7 is a graph showing the errored seconds overlaid with the power usage over a week for an example line.

### Description of Preferred Embodiments

The present invention is described herein with reference to particular examples. The invention is not, however, limited to such examples.

This invention relates to a method of identifying an electromagnetic interference fault associated with a digital subscriber line, in particular intermittent REIN/SHINE faults. The method gathers appropriate DSL line parameters that are affected by electromagnetic interference, such as the errored seconds or signal to noise ratio. Electrical power usage data associated with the customer premises is also gathered. With sufficient data gathered over a period of time, a degree of similarity between the two sets of data can be determined, for example by comparing on/off events in the power usage data (indicative of an appliance being switched on/off) with a change in the DSL line parameter. Alternatively, cross-correlation between the interference data and the power usage data can be used. The degree of similarity between the two sets of data gives an indication as to whether the line is experiencing electromagnetic interference originating from the customer premises.

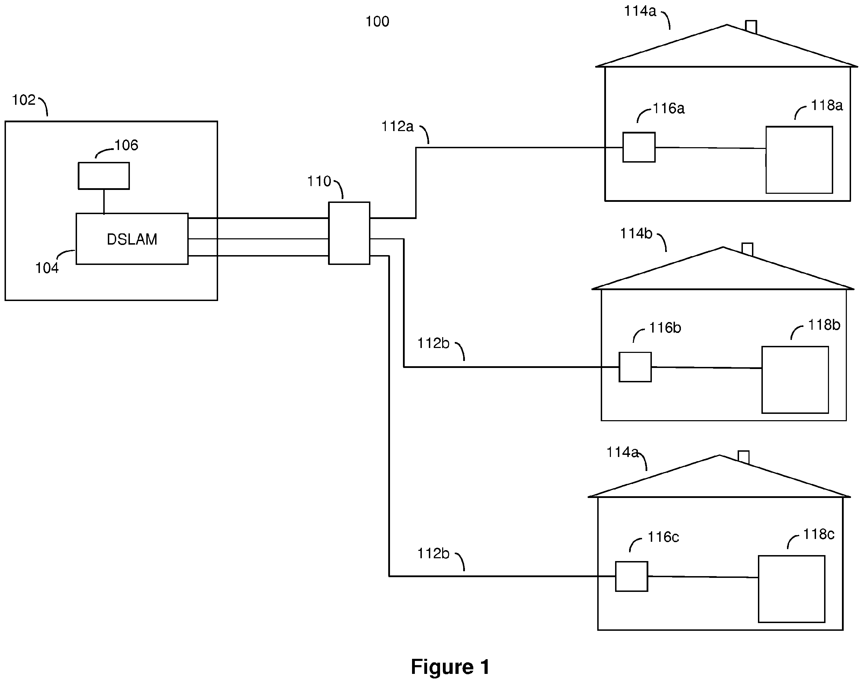

Figure 1 illustrates a simplified diagram of an asymmetric digital subscriber line (ADSL) network. Some elements have been omitted for simplicity, and conversely in some practical deployments, some elements shown are not required.

The telecommunications network 100 includes 3 customer's premises 114a, 114b and 114c. Each of the customer's premises 114a, 114b and 114c is connected to a telephone exchange 102 via respective telephone lines 112a, 112b and 112c. The lines pass through a Primary Cross Connection Point (PCP) 110. Each of the lines is a twisted metallic pair of wires made of copper or aluminium. Specifically, a network terminating equipment (NTE) 116a, 116b or 116c, connect to the end of each of the lines at the customer premises end. Internal wiring then connects each NTE to an associated DSL modem or router 118a, 118b or 118c. At the other end of each line at the exchange 102, the lines terminate at a digital subscriber line access multiplexer, DSLAM, 104. The DSLAM provides digital subscriber line (DSL) services to connected lines and associated customer premises. The connected lines are thus also referred to as digital subscriber lines, or DSL lines, though it will be appreciated that the line can also provide PSTN services. Connected to the DSLAM 104 is a control unit 106, which comprises a processor and a data store, such as hard disk array or similar. The control unit 106 is able to gather and process various measurements made by the DSLAM 112 and routers 118a, 118b, and 118c.

The DSLAM 112 and routers 118a, 118b, and 118c can measure various parameters associated with the lines.

In an alternative arrangement, the control unit 106 can also be part of the routers 118a, 118b or 118c, or a unit connected to the routers, which can gather the necessary measurements.

In normal operation, electrical noise ingress in the form of electromagnetic or radio frequency (RF) interference on xDSL lines causes the protocol to adapt in order to keep the line in synchronisation with the least transmission errors. In some instances, the interference may be too severe and the xDSL line protocol drops the connection before restarting, a process called line resynchronisation. This type of interference is often referred to a Repetitive Electrical Impulse Noise (REIN) and Single High level Impulse Noise Event (SHINE), and can result from faulty electro-mechanical, electronic, and electrical equipment generating electromagnetic signals in the same spectral band as used by the DSL line.

When the interference is present, it is possible to see the effects on the xDSL protocol by observing certain xDSL parameters, such as those parameters that relate to errors being experienced on the line, the signal to noise ratio, or the line rate. In this example "errored seconds" (the number of seconds of a transmission containing errors that result in any corrupted information) are used, which increase when the line experiences electromagnetic interference. These parameters are gathered at the DSLAM 104 and at the routers.

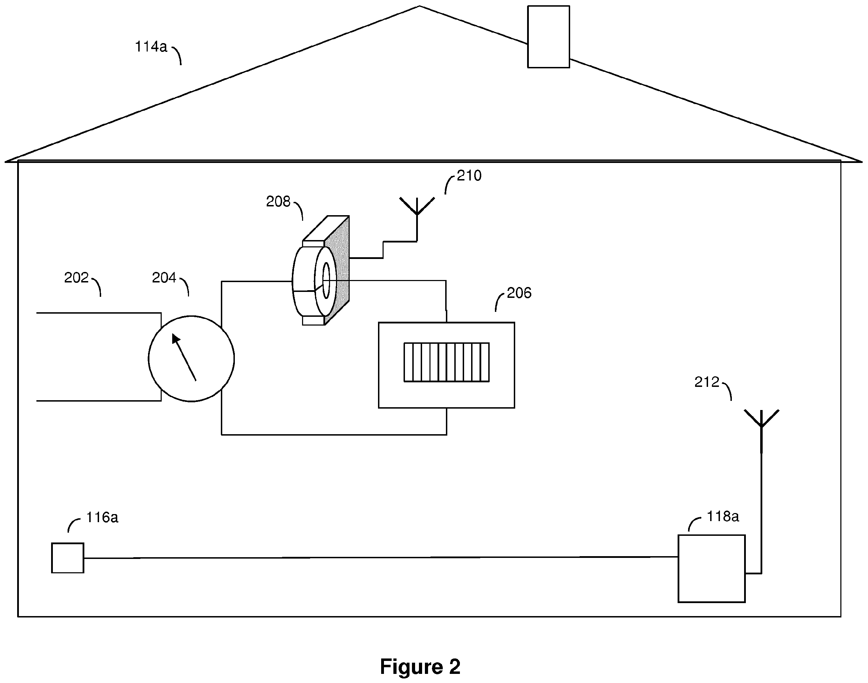

Figure 2 shows one arrangement within the customer premises 114a. The premises has a 240V AC mains supply 202, which is connected to an electrical meter 204. The meter 204 measures the amount of energy used for billing purposes. The meter 204 then connects to the consumer unit 206 to which multiple in-home power circuits are connected (not shown). To measure energy usage of the premises a current clamp 208 is connected around one of the conductors between the meter and the consumer unit. The current clamp 208 incorporates a wireless transmitter 210, which sends the measured energy usage data to the hub 118a via a suitable wireless receiver 212. The data may be sent over a standard Wi-Fi protocol, though some other protocol operating at a lower frequency, typically 868MHz, would be preferable as this provides greater range and distance whilst also using less energy which is important as the current clamp 208 and transmitter 210 may be battery powered and not mains powered. The hub 118a is thus able to collect energy usage data associated with the premises 114a.

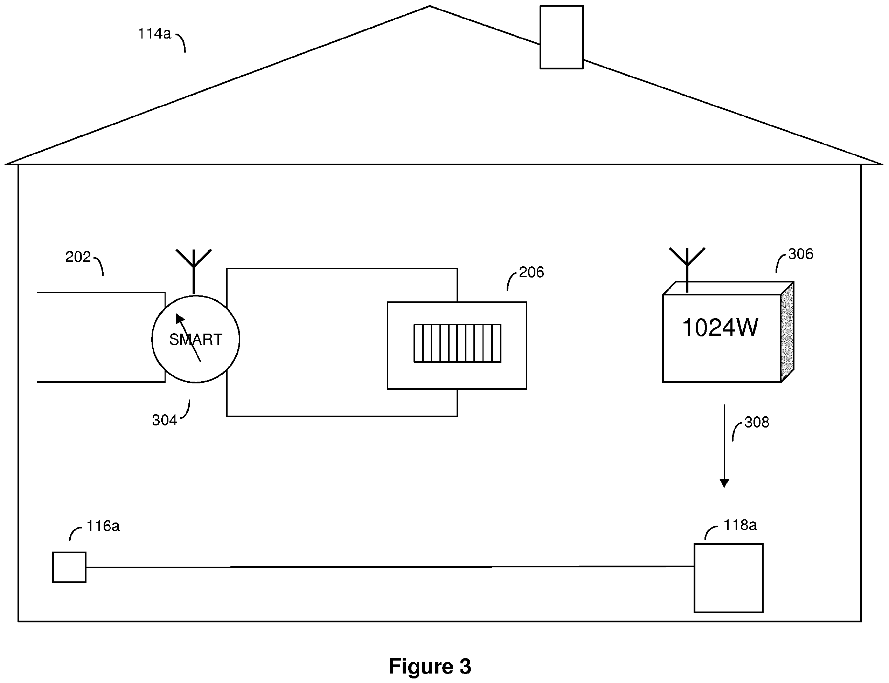

Figure 3 shows an alternative arrangement within the customer premises 114a. The premise has a 240V AC mains supply (102) which is connected to a "smart" electrical meter (or smart meter) 304 which measures the amount of energy used for billing purposes. The smart meter 304 then connects to the consumer unit 206 to which multiple in-home power circuits are connected (not shown). The smart meter 304 is provided with a display unit 306, connected wirelessly or directly to each other, where the energy usage is displayed. The smart meter 304 also sends the energy usage to the energy provider via an appropriate radio technology (normally cellular) for billing purposes. Thus, the energy usage data can be queried from the energy provider over the internet, or can gathered directly from the display unit 306 over for example a wireless link (e.g. Wi-Fi, Bluetooth or similar) to the hub 118a.

Whilst the arrangements of Figures 2 and 3 have been described with reference to customer premises 114a, it should be appreciated that similar arrangements can be found in the other customer premises 114b and 114c.

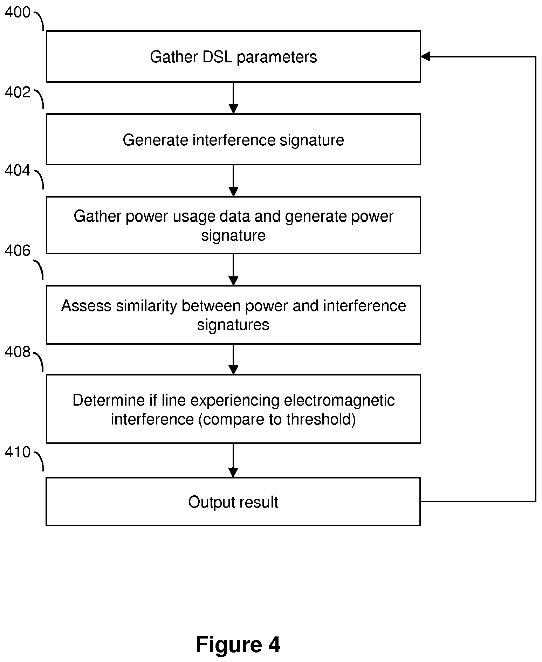

Figure 4 is a flow chart summarising the steps of the present invention.

In step 400, the control unit 106 gathers DSL parameters associated with the line 112a from the DSLAM and the hub 118a. In this example, the downstream errored seconds (hereinafter referred shortened to "errored seconds") are used, which are collected from the hub 118a. The downstream errored seconds refers to the number of seconds in a given collection period, or time bin, where an un-correctable error has occurred in the downstream direction (i.e. as measured on data received at the hub118a). Un-correctable errors are data packets that have too many bit errors for the forward error correction (FEC) to correct and therefore the whole data packet is lost and must be retransmitted. Un-correctable errors cause broadband performance degradation due to the need for data retransmission. This lowers throughput and increases response times. The reason why the downstream signal is used is that the signal is strongest at the transmitter (DSLAM) and then degrades over the line until it reaches the premises where it is received. Therefore the lowest signal level is at the premises and thus more susceptible to local electromagnetic interference, which is what we are trying to detect.

It should be noted that other DSL parameters could also be used instead or as well that are affected by RF interference, such as SNR margin (preferably downstream), maximum attainable rate, etc.

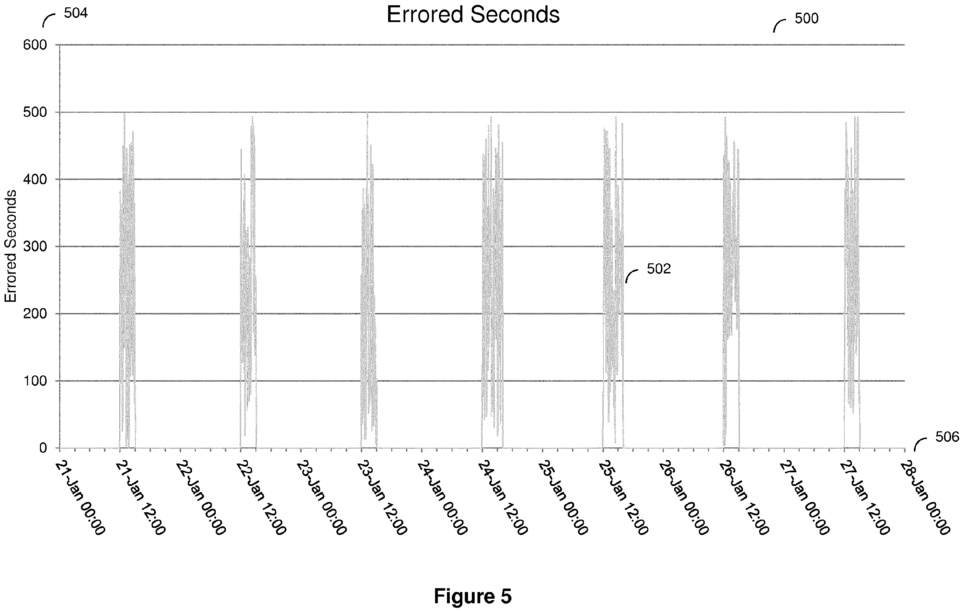

In step 402, this errored seconds data is used to generate an interference signature for line 112a, which is in its simplest form can be represented by a plot of the errored seconds over time as illustrated by the graph 500 in Figure 5, and stored at the control unit 106.

The graph 500 shows an example of a line suffering electromagnetic interference, with the plot 502 showing the errored seconds over a period of a week. The plot 502 shows a daily repetitive pattern of errored second occurring between the hours of roughly 12pm and 3pm. This is indicative of a problem experienced on the line, but the aim is to determine whether the cause is electromagnetic interference.

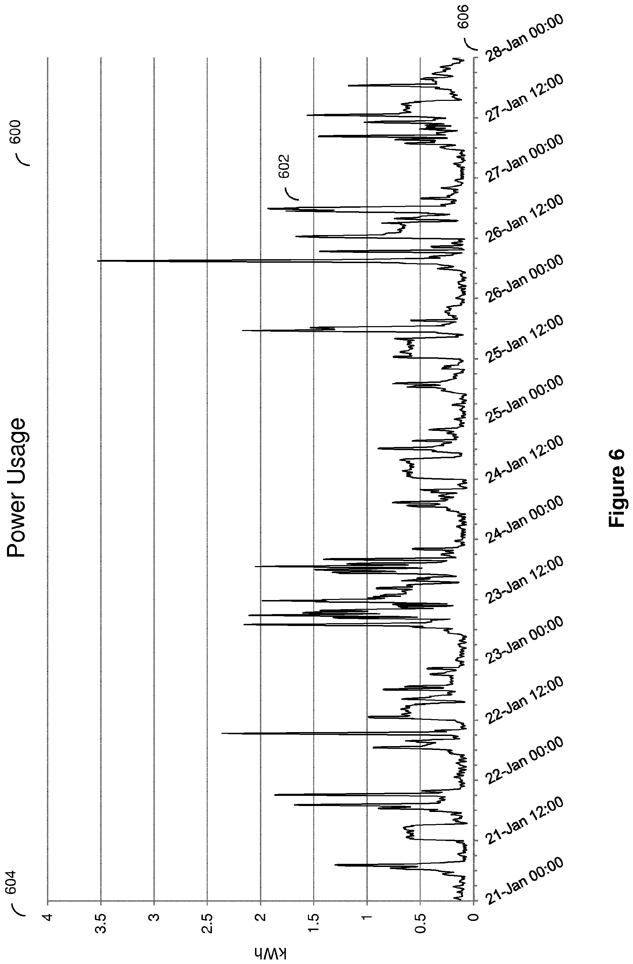

In step 404, electrical power usage data associated with the customer premises 114a is gathered by the control unit 106. This can be done via the home hub 118a as described with reference to Figure 2 and one of the examples in Figure 3, or from the energy provider as described with reference to the other example in Figure 3. This data is used to generate a power usage signature, which in its simplest form can be represented by a plot 602 of power usage over time as illustrated by the graph 600 in Figure 6, and stored at the control unit 106.

In Figure 6, the y-axis shows the power in kWh, and the x-axis shows the time (here a week is shown). The power usage plot 602 changes over time, indicative of items of electrical equipment being turned on and off in the customer premises 114a.

In step 406, the control unit 106 assesses the degree of similarity between the interference signature 502 for line 112a and the power usage signature 602 for the customer premises 114a. The aim is to determine whether there is some match between the changes in the interference signature with changes in the power usage signature during the same time period. In short, whether an appliance within the customer's premises 114a has been switched on (overall power usage increasing) and off (overall power usage decreasing) at the same time as the interference signature for line 112a shows some change in activity (increase or decrease in errored seconds). The control unit 106 can apply various techniques to assess the degree of similarity.

One technique is to analyse the power usage signature to determine a set of on/off events i.e. an "on" time is when the power usage increases and an "off" time when the power usage decreases. This can be used to identify when appliances or devices are being switched on and off. This set of on/off events can then be compared over the same time period to the interference signature timings, in particular increasing and decreasing interference (in this example, the errored seconds), to determine the degree of similarity between the two sets of data. Thus, the degree of similarity maybe a numerical count of the number of matches between the on/off events and the interference events, or a percentage of matched interference events.

A similar technique is to use power disaggregation to determine the appliance on/off timings. Disaggregation or "nonintrusive load monitoring" is a process for analysing the overage household power usage and deducing how this is apportioned to individual appliances. There are many techniques being used based on statistical analysis and machine learning, with open source toolkits available to do this, though the specifics of how they work are not explored here. The output of these toolkits provide a list of appliances and their power usage together with their on/off timings. A comparison can then be made between these on/off event timings of each appliance with the start (or increase) and stop (or decrease) event timings in the interference signature to determine the degree of similarity between the two sets of data. Thus, the degree of similarity maybe a numerical count of the number of matches between the on/off events and the interference events, or a percentage of matched interference events.

Another technique is to treat the interference signature and power usage signature as two input signals and use a signal processing technique known as cross-correlation to determine the degree of similarity of between the two input signals. The specific result will depend on the specific cross-correlation technique used.

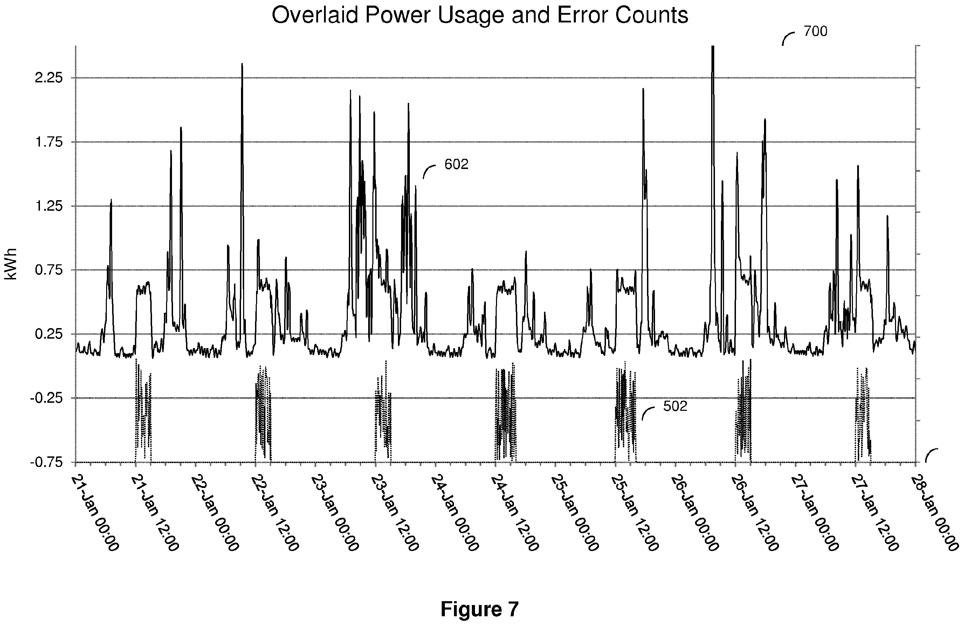

To help illustrate the correlation assessment of step 406, reference is made to Figure 7, which shows the plots 502 and 602 of Figure 5 and Figure 6 respectively overlaid onto the same graph 700. It can be seen that the power usage within the customer premises 114a is increasing at the same time that the errored seconds are also occurring. This indicates that the interference is likely being caused by an appliance in the customer premises 114a emitting electromagnetic interference. The assessment of the degree of similarity between the two plots in step 406 will help determine this.

Then in step 408, the result of the assessment in step 406, the degree of similarity, is compared to a predetermined threshold or thresholds to determine whether the line is experiencing electromagnetic interference. The thresholds are set so that a degree of similarity above the predetermined threshold is indicative of the line experiencing electromagnetic interference, and a degree of similarity below the threshold is indicative of the line not experiencing electromagnetic interference. In the latter case, the line may be experiencing some other form of interference. Note the specific threshold used will be dependent on the technique employed to assess the degree of similarity in step 406.

For example, if the degree of similarity returned from step 406 is a proportion of matched interference events with power on/off events, then the threshold may be set at a predetermined percentage, say 50%, above which it can be confidently said that the line is experiencing electromagnetic interference from the customer premises. The result is effectively provides a fault classification for the line, specifically whether an electromagnetic interference fault is being experienced on the line or not.

The result of step 408 is output in step 410 by the control unit 106, after which the process from steps 400 to 410 is repeated.

In practice, whilst the DSL parameter data may be collected by the DSLAM/router fairly regularly, say every 15 minutes, and the power usage data almost continuously, the process of steps 400 to 410 need only be performed on a daily basis, even though shorter intervals and in real-time are possible.

In practice, the DSL parameters may be collected at a different time interval compared to the power usage data. Shorter time intervals provide higher accuracy and ensure that short interference events are not missed. Sampling both DSL and power usage every second would therefore provide the optimum results but is also effective at lower sampling rates, such as every 60 seconds or even 15 minutes. The processing of the data can be undertaken in real time to provide an instant insight into interference being present but it is more likely to be carried out on a daily basis.

The results output by the control unit 106 can also be stored by the control unit, so that results over a longer period of time, for example a month, can be examined to confirm that the line is repeatedly experiencing electromagnetic interference.

The above method has been described with reference to a single customer premises 114a. However, in some instances, a line 112a may be experiencing electromagnetic interference that is not picked up by the method described above as the interference originates from a neighbouring premises, such as customer premises 114b or 114c, rather than 114a to which the line is associated. Therefore, if power usage data is available for use from other customer premises 114b and 114c, then the control unit could use such data instead of the power usage data associated with customer premises 114a to determine if it is one of these other customer premises causing electromagnetic interference on the line 112a. Indeed, if a disaggregation method is being used in step 406, then the control unit 106 could run through a list of appliances in all the customer premises in the neighbourhood to find one that matches, or has a high degree of similarity with, the interference signature.

Whilst the examples are described with reference to ADSL, a person skilled in the art will appreciate that the methods described can be applied to other DSL arrangements such as VDSL.

Exemplary embodiments of the invention are realised, at least in part, by executable computer program code which may be embodied in an application program data. When such computer program code is loaded into the memory of a processor in the control module 106, it provides a computer program code structure which is capable of performing at least part of the methods in accordance with the above described exemplary embodiments of the invention.

A person skilled in the art will appreciate that the computer program structure referred can correspond to the flow chart shown in Figure 4, where each step of the flow chart can correspond to at least one line of computer program code and that such, in combination with the processor in the control module 106, provides apparatus for effecting the described process.

In general, it is noted herein that while the above describes examples of the invention, there are several variations and modifications which may be made to the described examples without departing from the scope of the present invention as defined in the appended claims. One skilled in the art will recognise modifications to the described examples.

## Claims

1. A method of identifying an electromagnetic interference fault associated with a digital subscriber line in a telecommunications network, said method comprising:
(i) generating an interference signature by monitoring a digital subscriber line parameter associated with the digital subscriber line over a period of time, wherein the digital subscriber line parameter is one that is affected by electromagnetic interference;
(ii) generating an electrical power usage signature by monitoring the electrical power usage at the customer premises associated with the digital subscriber line over the period of time;
(iii) determining a degree of similarity between the interference signature and the electrical power usage signature; and
(iv) generating a fault classification for the line in dependence on the result of the determining step.

2. A method according to claim 1, wherein the method further comprises comparing the determined degree of similarity to a threshold, and wherein the fault classification is generated based on the result of the comparison.

3. A method according to claim 1 or 2, wherein the fault classification comprises an identification of whether there is an electromagnetic fault experienced on the line.

4. A method according to any preceding claim, wherein the interference signature comprises interference events, each interference event corresponding to an increase in the digital subscriber line parameter, wherein the electrical power usage signature comprises electrical power usage events, each electrical power usage event corresponding to an increase in electrical power usage, and wherein determining the degree of similarity between the interference signature and the electrical power usage signature comprises matching the interference events with the electrical power usage events.

5. A method according to any preceding claim, wherein the digital subscriber line parameter is one of: downstream errored seconds, signal to noise ratio, or line rate.

6. A control module for identifying an electromagnetic interference fault associated with a digital subscriber line in a telecommunications network, adapted to:
(i) generate an interference signature by monitoring a digital subscriber line parameter associated with the digital subscriber line over a period of time, wherein the digital subscriber line parameter is one that is affected by electromagnetic interference;
(ii) generate an electrical power usage signature by monitoring the electrical power usage at the customer premises associated with the digital subscriber line over the period of time;
(iii) determine a degree of similarity between the interference signature and the electrical power usage signature; and
(iv) generate a fault classification for the line in dependence on the result of the determining step.
